# EUROPEAN PATENT APPLICATION

(11) **EP 4 570 558 A1**
(43) Date of publication of application: **18.06.2025**
(21) Application number: 24218044.6
(22) Date of filing: 06.12.2024
(51) Int. Cl.: B60K 35/22

(54) **PASSENGER CONTENT DISPLAY DEVICE FOR A ROAD VEHICLE; RELATED ROAD VEHICLE AND CONTROL METHOD**

(30) Priority: 11.12.2023 IT 202300026340
(71) Applicant: FERRARI S.p.A., 41100 Modena (IT)
(72) Inventor: DE PAOLI, Alessandro Paolo, 41100 MODENA (IT)
(74) Representative: Studio Torta S.p.A.

(57) **Abstract**

A device (3) for displaying contents to a passenger (P) of a road vehicle (1); the device (3) for displaying contents comprising: a support element (5) configured to be mounted at a dashboard (4) of the road vehicle (1); at least one screen (6) mechanically connected to the support element (5) and configured to be visible to the passenger (P) while the vehicle is being driven; a first portion (7) configured to project contents while the vehicle is being driven; a second portion (8), adjacent to the first portion (7) and configured to project a video stream (VF) of at least part of the environment external to the road vehicle (1).

## Description

### CROSS-REFERENCE TO RELATED APPLICATIONS

This patent application claims priority from Italian patent application no. 102023000026340 filed on December 11, 2023, the entire disclosure of which is incorporated herein by reference.

### TECHNICAL FIELD

The present invention relates to a passenger content display device for a road vehicle, to a related road vehicle and to a related control method.

### PRIOR ART

Generally, road vehicles are provided with a plurality of display devices arranged at the dashboard of the road vehicle.

Historically, each road vehicle comprises at least one display device reserved to the driver, for example, the screens or the indicators arranged at the control panel of the vehicle, namely on the dash panel portion interposed between the steering wheel and the windshield.

In recent years, such devices can be assisted by other screens (for example of the head-up type) which complete the display of information for the driver.

In some cases, devices have been developed aimed at being viewed by the passengers of the road vehicles. In particular, for the rear seats, actual multimedia devices have been developed which allow the passengers to view distracting contents, such as movies, documentaries, news, etcetera. Such contents can hardly be enjoyed by a passenger sitting in the front, next to the driver, without distracting the driver from driving. For this reason, a specially provided screen is hardly dedicated to the front passenger.

In recent years, the problem of the distraction of the driver has been circumvented through anti-distraction logics and filters, thus allowing the front passenger to enjoy distracting contents also when the vehicle is in movement.

Conversely, while the vehicle is being driven, passing from the viewing of contents, inside the vehicle and still with respect to the passenger, to the viewing outside the vehicle, can generate discomfort and nausea in the front passenger, who is often forced to stop enjoying the contents for obviating the problem. In other words, passing from a fixed viewing to a viewing in movement (and vice versa) generates nausea in the passenger, reducing the pleasure of travel.

Document EP4215415A1 describes a method for combining primary image contents and secondary image contents for display on a device on board a vehicle for road use.

Document DE102020113485A1 describes a method for operating a display device carried on the head of a user in a vehicle.

### SUMMARY

The object of the present invention is to provide a passenger content display device for a road vehicle, a related road vehicle and a related control method which are at least partially free from the above-described drawbacks and, simultaneously, are simple and cost-effective to manufacture.

According to the present invention, a passenger content display device for a road vehicle, a related road vehicle and a related control method are provided as claimed in the following independent claims and, preferably, in any one of the claims directly or indirectly dependent on the independent claims.

The claims describe preferred embodiments of the present invention forming integral part of the present description.

### BRIEF DESCRIPTION OF THE DRAWINGS

The present invention will now be described with reference to the accompanying drawings, which illustrate some non-limiting example embodiments thereof, wherein:
- Figure 1 is a schematic perspective view, with details removed for clarity, of a road vehicle in accordance with the present invention;
- Figure 2 is a schematic perspective view, with details removed for clarity, of a viewing from inside the passenger compartment of the vehicle of Figure 1 in which a passenger content display device is visible;

- Figure 3 is a detail of Figure 2 in which a non-limiting embodiment is visible of a content display device in accordance with the present invention;
- Figure 4 is a schematic side view, with details removed for clarity, which shows the change of view of a passenger from the content display device to the road.

### PREFERRED EMBODIMENTS OF THE INVENTION

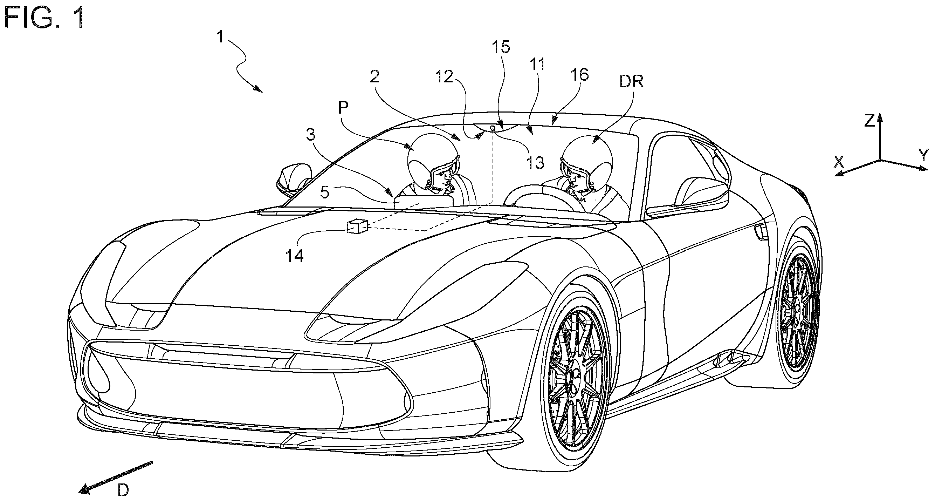

In Figure 1, reference numeral 1 schematically indicates a road vehicle driven by a driver DR and provided with two front wheels and two rear (in particular driving) wheels.

The same reference numerals and the same reference letters in the figures identify the same elements or components with the same function.

Within the scope of the present description the term "second" component does not imply the presence of a "first" component. Such terms, in fact, are used as labels for improving the clarity and are not to be understood in a limiting manner.

The elements and the characteristics illustrated in the different preferred embodiments, including the drawings, can be combined with one another without however departing from the scope of protection of the present patent application as described in the following.

It is specified that in the following of the present description, expressions such as "superiorly", "inferiorly", "in the front", "in the back" and the like are utilised with reference to conditions of normal advancement of the road vehicle 1 along the normal direction D of advancement.

As is illustrated in the non-limiting embodiment of Figure 1, it is further possible to define:
- a longitudinal axis X, integral with the vehicle 1 and arranged, in use, horizontal and parallel to a normal direction D of advancement of the vehicle 1;
- a transverse axis Y, integral with the vehicle 1 and arranged, in use, horizontal and orthogonal to the axis X; and
- a vertical axis Z, integral with the vehicle 1 and arranged, in use, vertical and orthogonal to the axes X, Y.

The vehicle 1 is provided with a passenger compartment 2 which is adapted to house the driver DR and at least one passenger P beside the driver DR.

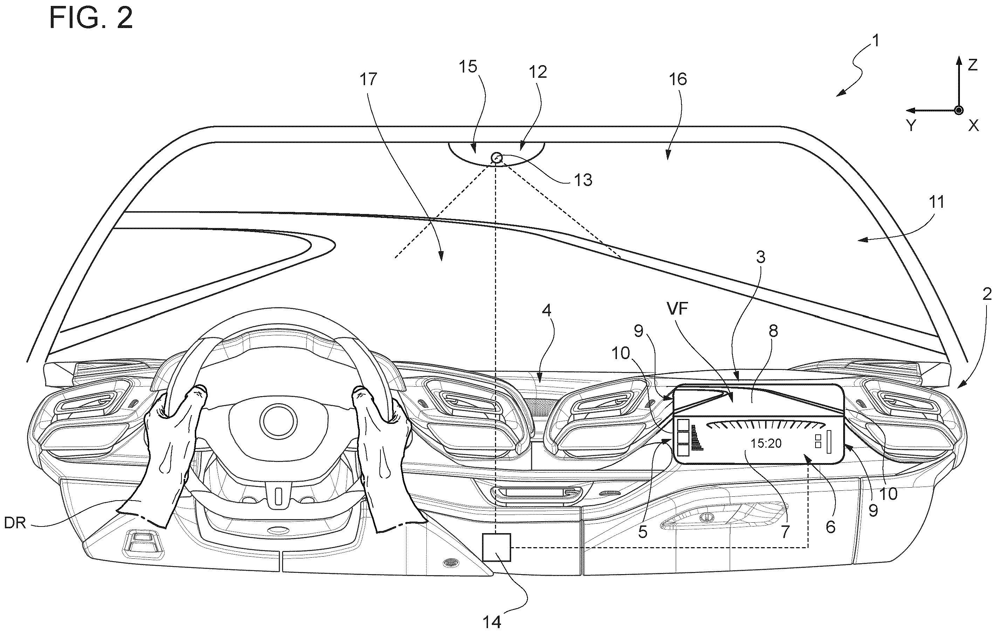

As is illustrated in the non-limiting embodiments of Figures 1 and 2, the vehicle 1 comprises at least one device 3 for displaying contents for the passenger P, which is arranged at a vehicular dashboard 4, facing the passenger P. In particular, the front position of the display device 3 with respect to the passenger results to be of particular importance for what discussed in the following. The term "front" means in a manner such that the point of view of the passenger lies on a line perpendicular to the display device 3.

The device 3 comprises at least one support element 5, which is configured to be mounted at the dashboard 4 of the road vehicle. In particular, the support element 5 can be any plastic or metallic support. In some non-limiting cases, the support device 5 is integrated inside the dashboard 4.

The device 3 further comprises a screen 6 mechanically connected to the support element 5 and configured to be visible to the passenger P while the road vehicle 1 is being driven by the driver DR. Preferably but not limitedly, the screen 6 is a flat screen, namely that lies along a plane. In other non-limiting embodiments not illustrated, the screen 6 is provided with a developable surface area.

Advantageously, the screen 6 comprises a first portion 7 for projecting contents while the road vehicle 1 is being driven. For example, the contents can be multimedia contents, such as videos, movies, music, ..., or informational contents, such as maps, accelerations to which the vehicle is subjected, state of charge, etcetera.

Advantageously, the screen 6 further comprises a second portion 8, which is adjacent to the first portion 7 and is configured to project a video stream VF of at least part of the environment external to the road vehicle 1.

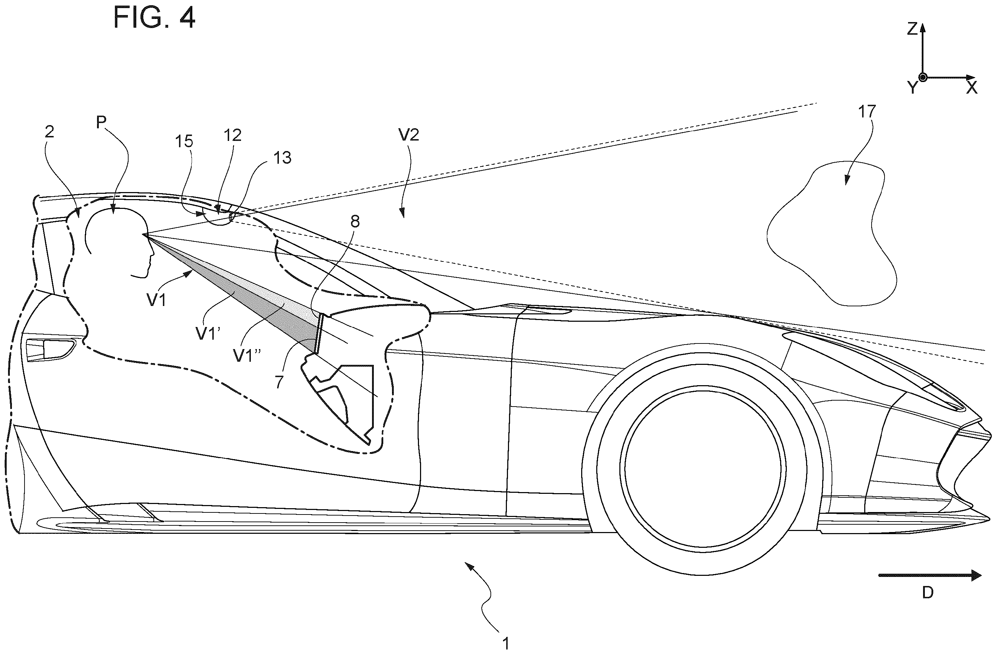

According to some preferred non-limiting embodiments, such as the ones illustrated in Figures 2 to 4, the first portion 7 and the second portion 8 of the screen 6 are arranged on horizontally parallel bands 9.

According to other non-limiting embodiments not illustrated, the second portion 8 is superimposed on the first portion 7 with a geometrical shape or is arranged vertically beside the first portion 7.

Preferably but not limitedly, the second portion 8 extends horizontally from one end 10 to the other end of the screen 6. In particular, the ends 10 are arranged horizontally on opposite sides of the screen 6, namely along the axis Y.

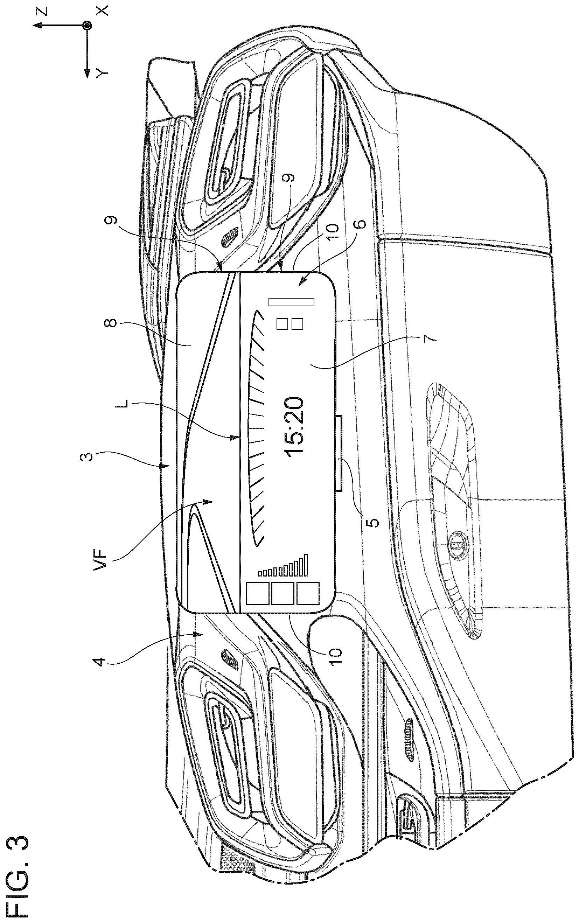

In particular, the first portion 7 and the second portion 8 are separated by a, preferably but not limitedly, straight line L. In the embodiment of Figures 2 and 3, the line L is parallel to the transverse axis Y of the road vehicle 1.

In some preferred non-limiting cases, the second portion 8 is arranged, along the vertical axis Z, superiorly with respect to the first portion 7; in particular, in use, the second portion 8 is closest to a windshield 11 of the road vehicle 1. In such manner, the continuity of perception of the passenger P in passing from a view V1 facing the screen 6, divided into portions V1' and V1", which focus on the first portion 7 and on the second portion 8, respectively, to a view V2 which passes through the windshield 11 of the road vehicle 1, is improved. Therefore, in this configuration the perception of nausea is further reduced.

In other non-limiting cases not illustrated, the second portion 8 is arranged, along the vertical axis Z, inferiorly with respect to the first portion 7; in particular, in use, the second portion 8 is configured to be furthest away from the windshield 11 of the road vehicle 1. In such manner, even if more distant from the windshield 11, the second portion anyway contributes to maintaining the perception of the passenger P of being in movement, anyway reducing the feeling of nausea.

Preferably but not limitedly, the first portion 7 occupies at least 50%, in particular at least 70%, of the surface area of the screen 6. In particular, the second portion 8, in order to achieve the desired effect, represents at least 10% of the surface area of the screen 6.

Advantageously, the vehicle 1 further comprises an optical detection device 12, in particular a camera 13, preferably already present on board the vehicle 1, for example the camera designated to identify the lanes for maintaining the vehicle in the centre of the lane it is in.

Specifically, the optical detection device 12 faces the outside of the vehicle 1 (in particular in the sense of a normal direction D of travel) and is configured to capture the video stream VF projected from the screen 6 at the second portion 8.

The vehicle 1 preferably also comprises a control unit 14, connected to the optical detection device 12 and to the screen 6 and configured to control the screen 6 by dividing it into the first portion 7 and the second portion 8 and adjusting the brightness thereof.

In particular, the control unit 14 is configured to control the differential brightnesses between the first portion 7 and the second portion 8 of the screen 6. Preferably, the brightness of the second portion 8 is lower than the brightness of the first portion 7. In such manner, the passenger P will see more clearly the contents which he/she wants to enjoy, unconsciously maintaining the awareness of being in movement, even if the second portion 8 is less visible since it has a lower brightness.

Preferably, in order to minimise the sense of nausea, the control unit 14 is configured to control the screen 6 so as to project the video stream detected by the optical detection device 12 in real-time. In such manner, the passenger P will not have time lags between the view of the screen 6 and the peripheral view of the outside of the vehicle 1.

According to the non-limiting embodiments of the accompanying figures, the vehicle 1 comprises a ceiling element 15 arranged at an upper portion 16 of the windshield 11 of the road vehicle 1.

In particular, the optical detection device 12 is arranged at the ceiling element 15 and facing a space 17 in front of the road vehicle 1. In such manner, the passenger P sees, on the second portion 8, a video stream VF from a point of view similar to what he/she would have if looking at the space 17.

In accordance with a further aspect of the present invention, a method for displaying contents to a passenger of a road vehicle is described.

In particular, the method comprises at least the steps of: transmitting by means of the device 3 for displaying contents to the passenger P of the vehicle 1; dividing the screen 6 of the display device 3 into the first portion 7 and the second portion 8; projecting, while the vehicle is being driven, the contents onto the first portion 7; and projecting, still while the vehicle is being driven, onto the second portion 8, the video stream VF of at least part of the environment external to the road vehicle 1.

Preferably, the method further comprises the step of detecting the video stream VF by means of the optical detection device 12 facing the outside of the vehicle 1, in particular facing the space 17 in front of the road vehicle 1 along the direction D of travel.

According to some non-limiting embodiments, the method also comprises a step of differentially adjusting, through the control unit 14, the brightness of the first portion 7 and the second portion 8.

In some non-limiting cases, the division of the screen 6 is variable according to the content projected onto the first portion 7. For example, the proportions between the first portion 7 and the second portion 8 can vary if the passenger P is watching a movie or if the passenger P is viewing maps or other vehicular measurements.

Although the above-described invention refers in particular to a very precise example embodiment, it is not to be considered limited to such example embodiment, falling within its scope all those variations, modifications or simplifications covered by the appended claims, such as for example a different type of screen, a different placing of the device 3, a different type of vehicle (for example with two wheels or with a front-wheel drive), etc.

The present invention has many advantages.

Firstly, it allows increasing the pleasure of travel of the passenger, who can peacefully enjoy contents which could cause said passenger to feel discomfort and nausea.

A further advantage of the present invention lies in the possibility to differentially adjust the brightness of the display device, avoiding the viewing in movement to bother the view of a content.

Finally, the present invention allows carrying out the above-described method without having to install further sensors, but rather by simply exploiting the twilight sensor present on board most of the vehicles currently on the market, for example at a vehicular ceiling element.

### LIST OF THE REFERENCE NUMERALS OF THE FIGURES

- 1: vehicle
- 2: passenger compartment
- 3: display device
- 4: dashboard
- 5: support element
- 6: screen
- 7: first portion
- 8: second portion
- 9: horizontally parallel bands
- 10: end
- 11: windshield
- 12: optical detection device
- 13: camera
- 14: control unit
- 15: ceiling element
- 16: upper portion of the windshield
- 17: space in front of
- D: normal direction of travel
- DR: driver
- P: passenger
- V1: view
- V1': portion
- V1": portion
- V2: view
- VF: video stream
- X: axis
- Y: axis
- Z: axis

## Claims

1. A device (3) for displaying contents to a passenger (P) of a road vehicle (1); the device (3) for displaying contents comprising:
- a support element (5) configured to be mounted at a dashboard (4) of the road vehicle (1);
- at least one screen (6) mechanically connected to the support element (5) and configured to be visible to the passenger (P) while the vehicle is being driven;
the device (3) for displaying contents being **characterised in that** the screen (6) comprises:
a first portion (7) configured to project contents while the vehicle is being driven;
a second portion (8), adjacent to the first portion (7) and configured to project a video stream (VF) of at least part of the environment outside the road vehicle (1).

2. The device (3) according to claim 1, wherein the first portion (7) and the second portion (8) of the screen (6) are arranged on horizontally parallel bands (9).

3. The device (3) according to claim 1 or 2, wherein the second portion (8) extends horizontally from one end (10) to the other end of the screen (6).

4. The device (3) according to claim 2 or 3, wherein the second portion (8) is arranged, along a vertical axis (Z), superiorly with respect to the first portion (7); in particular, in use, it is configured to be closest to a windshield (11) of the road vehicle (1).

5. The device (3) according to claim 2 or 3, wherein the second portion (8) is arranged, along a vertical axis (Z), inferiorly with respect to the first portion (7); in particular, in use, it is configured to be furthest away from a windshield (11) of the road vehicle (1).

6. The device (3) according to any one of the preceding claims, wherein the first portion (7) occupies at least 50%, in particular at least 70%, of the surface area of the screen (6).

7. A road vehicle (1) comprising:
- a passenger compartment (2) configured to accommodate a driver (DR) and at least one passenger (P) beside the driver (DR);
- a vehicular dashboard (4);
- a device (3) for displaying contents to the passenger (P) according to any one of the preceding claims, which is arranged at the vehicular dashboard (4), facing the passenger (P) ;
- an optical detection device (12), in particular a camera (13), facing the outside of the vehicle (1) and configured to capture the video stream (VF) projected from the screen (6) at the second portion (8).

8. The vehicle (1) according to claim 7 and further comprising:
a control unit (14), connected to the optical detection device (12) and the screen (6) and configured to control the screen (6) by dividing it into the first portion (7) and the second portion (8) and adjusting the brightness thereof.

9. The vehicle (1) according to claim 8, wherein the control unit (14) is configured to control differential brightnesses between the first portion (7) and the second portion (8) of the screen (6).

10. The vehicle (1) according to any one of claims 7 to 9, wherein the control unit (14) is configured to control the screen (6) to project the video stream (VF) detected by the optical detection device (12) in real-time.

11. The vehicle (1) according to any one of claims 7 to 10 and comprising a ceiling element (15) arranged at an upper portion of a windshield (11) of the road vehicle (1); wherein the optical detection device (12) is arranged at the ceiling element (15) and facing a space (17) in front of the road vehicle (1).

12. A method for displaying contents to a passenger (P) of a road vehicle (1); the method comprising the steps of:
transmitting by means of a device (3) for displaying contents to a passenger (P) of the road vehicle (1) located beside the driver (DR);
dividing a screen (6) of the device (3) for displaying contents into a first portion (7) and a second portion (8) which is adjacent to the first portion (7);
projecting, while the vehicle is being driven, the contents onto the first portion (7);
the method being **characterised in that** it comprises a step of projecting, while the vehicle is being driven, onto the second portion (8), a video stream (VF) of at least part of the environment outside the road vehicle (1).

13. The method according to claim 12 and comprising the further steps of:
detecting the video stream (VF) by means of an optical detection device (12) facing the outside of the vehicle (1), in particular facing a space (17) in front of the road vehicle (1) along a direction of travel.

14. The method according to claim 12 or 13 and comprising a step of differentially adjusting the brightness of the first portion (7) and the second portion (8).

15. The method according to any one of claims 12 to 14, wherein the division of the screen (6) is variable according to the content projected onto the first portion (7) .
